# EUROPÄISCHE PATENTSCHRIFT

(11) **EP 1 138 477 B1**
(45) Veröffentlichungstag und Bekanntmachung des Hinweises auf die Patenterteilung: **05.10.2005**
(21) Anmeldenummer: 01106526.5
(22) Anmeldetag: 15.03.2001
(51) Int. Cl.: B32B 15/08, B32B 27/04

(54) **Schichtverbundmaterial mit Dekorschicht aus verchromtem Metall**
Laminated composite material with chrome-plated metal decorative layer
Matériau composite stratifié avec couche décorative métallique plaquée au chrome

(30) Priorität: 23.03.2000 DE 10014046
(43) Veröffentlichungstag der Anmeldung: 04.10.2001
(73) Patentinhaber: Basell Polyolefine GmbH, 50389 Wesseling (DE)
(72) Erfinder: Müller, Klaus, 65843 Sulzbach (DE); Klemm, Klaus, 97656 Oberelsbach (DE)

(56) Entgegenhaltungen:
- EP-A- 0 108 710
- DE-A- 4 218 369
- GB-A- 2 008 492

## Beschreibung

Die vorliegende Erfindung betrifft ein Schichtverbundmaterial, enthaltend einen Träger aus einem thermoplastischen Polymeren, eine darauf angeordnete Zwischenlage und eine auf der Zwischenlage aufgebrachte Dekorschicht, wobei die Dekorschicht aus einem verchromten Metall besteht. Weiterhin betrifft die vorliegende Erfindung ein Verfahren zur Herstellung dieses Schichtverbundmaterials, sowie dessen Verwendung als reflektierendes oder als isolierendes Teil eines Haushaltsgerätes, eines Möbelstücks oder eines Formteils in der Elektro-, Bau- oder Automobilindustrie oder im Gesundheitsbereich.

Die bisher bekannten Schichtverbundmaterialien, welche insbesondere in der Möbel- oder in der Haushaltsgeräteindustrie eingesetzt werden, bestehen im wesentlichen aus einer Trägerschicht aus Holz oder Holzfasern oder aus unter Harzzusatz verpreßten Einzelpapieren, auf die unter Einwirkung von Hitze und Druck Dekorschichten sowie weitere hitzegehärtete Schichten, sogenannte Overlays, aufgebracht werden. Die dabei verwendeten Dekorschichten weisen häufig Holz-, Metall- oder Marmormaserungen auf. Die Dekorschichten werden in vielen Fällen zusammen mit den auf ihnen aufgebrachten hitzegehärteten Schichten als sogenannte Laminate verwendet.

Derartige Schichtverbundmaterialien weisen indes den Nachteil auf, daß sie eine gewisse Empfindlichkeit gegenüber von den Rändern her in die Kernschicht eindringender Feuchtigkeit aufweisen, weil sowohl Holz, als auch Holzfasern oder Einzelpapiere unter dem Einfluß von Feuchtigkeit zum Aufquellen neigen. Weiterhin lassen sich derartige Schichtverbundmaterialien nur mit relativ hohem Aufwand verformen.

Für zahlreiche industrielle Anwendungen, beispielsweise in der Automobil- oder Elektroindustrie benötigt man als Oberflächenmaterialien Werkstoffe, die einerseits eine hohe Druckfestigkeit und andererseits eine relativ hohe Temperaturbeständigkeit aufweisen und sich darüber hinaus gut dekorativ ausgestalten lassen sollten.

In der Möbelherstellung werden schon seit längerem Oberflächenmaterialien eingesetzt, wobei mehrere Schichten, u.a. eine Trägerschicht, eine Dekorschicht und eine darauf aufliegende hitzegehärtete Schicht, mit Hilfe von weiteren Verbundschichten, beispielsweise aus Papier oder aus Klebefolien, ein dekoratives Schichtverbundmaterial ergeben. Ein derartiges Schichtverbundmaterial ist jedoch sehr aufwendig herzustellen, weist oft einen hohen Formaldehydanteil auf und zeigt ein ungünstiges Quellverhalten.

Darüber hinaus haben die bislang beschriebenen Schichtverbundmaterialien der Nachteil, daß die aufgebrachten Schichten vergleichsweise dünn sind, häufig empfindlich auf mechanische Beanspruchung reagieren und keine verstärkende Wirkung auf andere Bauteile aufweisen, wenn sie mit diesen verbunden sind.

Aus der DE-A 1 97 22 339 ist ein Schichtverbundmaterial bekannt, welches eine Trägerschicht aus Polypropylen, eine darauf angeordnete Dekorschicht und eine auf der Dekorschicht aufgebrachte hitzegehärtete Schicht enthält. Weiterhin beschreibt die DE-A 19 858 173 ein Schichtverbundmaterial aus einer Trägerschicht verschiedener anderer thermoplastischer Polymerer, wie zum Beispiel aus bestimmten Copolymeren des Styrols oder aus Polyoxymethylen bzw. aus Polybutylenterephthalat, sowie einer darauf aufgebrachten Dekorschicht und einer auf dieser aufliegenden hitzegehärteten Schicht. Derartige Schichtverbundmaterialien aus einer Trägerschicht aus thermoplastischen Polymeren zeichnen sich gegenüber herkömmlichen Schichtverbundmaterialien mit Trägerschichten aus Holz, Holzfasern oder Papier u.a. durch eine hohe Temperatur- und Feuchtigkeitsbeständigkeit, bessere mechanische Festigkeit und eine leichtere Verarbeitbarkeit aus. Aufgrund einer gewissen Steifigkeit und Sprödigkeit der einzelnen polymeren Schichten zeigen aber auch die aus der DE-A 19 722 339 und der DE-A 19 858 173 bekannten Schichtverbundmaterialien noch gewisse Nachteile beim Verarbeiten und Verformen, insbesondere beim dreidimensionalen Verformen zu Bauteilen für den Automobil-, den Haushalts- oder den Elektrobereich. Weiterhin beobachtet man bei derartigen Schichtverbundmaterialien, daß deren weitere Bearbeitung, beispielsweise durch Lackieren oder durch das Anbringen von weiteren Funktionselementen, teilweise Schwierigkeiten macht.

Überdies ist es für einige industrielle Anwendungen, beispielsweise bei Haushaltsgeräten oder bei Formteilen der Elektro-, Bau- oder Automobilindustrie wichtig, daß solche Schichtverbundmaterialien gegenüber Wärme- oder Lichtstrahlung entweder isolierend oder aber reflektierend wirken, mechanisch und thermisch belastbar sind, eine gute Alterungsbeständigkeit und Haftbarkeit gegenüber anderen Materialien aufweisen, darüber hinaus leicht recycelbar sind und es ermöglichen, Funktionselemente leicht zu integrieren.

Die EP-A 108 710 beschreibt Metall-Polyolefin-Laminate mit ausgezeichneten Eigenschaften, wobei als Qualitätskriterium insbesondere eine optimale Bindungsstärke zwischen Metall und Polyolefin herausgestellt ist. Zu diesem Zweck soll zwischen dem Polyolefin und dem Metall eine Zwischenlage aus einem Propylencopolymer und einer alpha/beta-ungesättigten Carbonsäure oder aus einem Propylen-Ethylen-Copolymer und einem Elastomer vorgesehen sein.

Die DE-A 42 18 369 beschreibt Metall-Kunststoff-Verbunde auf Basis von Polypropylen Copolymerisaten, die ohne das Auftreten von Weißbruch herzustellen sind. Diese Verbunde sollen eine geringe Lichtdurchlässigkeit und eine geringe Gasdurchlässigkeit besitzen. Zu diesem Zweck wird nach der Lehre der DE-A ein Propylencopolymer durch eine Breitschlitzdüse extrudiert und danach auf ein Metallblech auflaminiert. Zur Haftungsverbesserung wird die Kuststofffolie auf dem Metallblech mit einem lösemittelhaltigen oder wässrigen Kleber verankert oder es wird ein Haftvermittler coextrudiert.

Die GB-A 2 008 492 beschreibt einen Verbund aus Olefinharz und Metall mit verbesserter Haftfestigkeit und Korrosionsbeständigkeit, bei dem ein spezieller Haftvermittler (primer layer) verwendet wird, der als modifiziertes Olefinharz bezeichnet ist. Die Modifizierung im Sinne der GB-A wird durch Einpolymerisieren von ethylenisch ungesättigten Monomeren mit polaren Gruppen erreicht.

Allen bekannten Lösungen zur Haftungsverbesserung zwischen Metall und Kunststoff ist gemeinsam, dass zusätzliche Haftvermittler oder Klebstoffe mit anderer chemischer Zusammensetzung als der Kunststoff eingesetzt werden müssen, was die Verwendung derartiger Verbundelemente als Formteile für Einsatzzwecke, bei denen die Reinheit der chemischen Zusammensetzung ein besonderes Anforderungsprofil darstellt, einschränkt.

Der vorliegenden Erfindung lag daher die Aufgabe zugrunde, den geschilderten Nachteilen abzuhelfen und ein verbessertes Schichtverbundmaterial bereitzustellen, welches u.a. mechanisch und thermisch stabil und alterungsbeständig ist, das leicht mit anderen Funktionselementen verbunden werden kann und überdies gegen Wärme- oder Lichtstrahlung entweder isolierend oder aber reflektierend wirkt.

Demgemäß wurde ein verbessertes Schichtverbundmaterial entwickelt, enthaltend einen Träger aus thermoplastischem Polypropylen mit einer Schmelzflussrate (MFR) im Bereich von 0,2 bis 100 g/10 min, bei 230 °C und einem Gewicht von 2,16 kg, einer Zwischenlage aus einem Vlies aus thermoplastischem Polypropylen, einer auf die Zwischelage aufgebrachten Dekorschicht aus einem verchromten Metall und einer auf die Dekorschicht aufgebrachten hitzegehärteten Schicht.

Weiterhin kann das erfindungsgemäße Schichtverbundmaterial auch auf beiden Seiten des Trägers aus den thermoplastischen Polymeren eine Zwischenlage, eine darauf angeordnete Dekorschicht sowie gegebenenfalls noch eine auf der Dekorschicht aufgebrachte hitzegehärtete Schicht enthalten, wodurch eine sandwichartige Struktur mit dem Träger in der Mitte entsteht.

Das Material des Trägers kann 1 bis 60, vorzugsweise 5 bis 50, besonders bevorzugt 10 bis 40 Gew.-%, bezogen auf das Gesamtgewicht des Trägers, an verstärkenden Füllstoffen enthalten, wie zum Beispiel Bariumsulfat, Magnesiumhydroxyd, Talkum mit einer mittleren Korngröße im Bereich von 0,1 bis 10 µm, gemessen nach DIN 66 115, Holz, Flachs, Kreide, Glasfasern, beschichtete Glasfasern, Lang oder Kurzgläsfasern, Glaskugeln oder Mischungen von diesen. Außerdem kann man dem Material des Trägers noch die üblichen Zusatzstoffe wie Licht-, UV- und Wärmestabilisatoren, Pigmente, Ruße, Gleitmittel, Flammschutzmittel, Treibmittel und dergleichen in den üblichen und erforderlichen Mengen hinzufügen.

Als Materialien für den Träger werden insbesondere auch Polyolefine wie Polypropylen eingesetzt. Unter der Bezeichnung Polypropylen sollen dabei sowohl Homo- als auch Copolymere des Propylens verstanden werden. Copolymere des Propylens enthalten in untergeordneten Mengen mit Propylen copolymerisierbare Monomere, beispielsweise C₂-C₈-Alk-1-ene wie u.a. Ethylen, But-1-en, Pent-1-en oder Hex-1-en. Es können auch zwei oder mehr verschiedene Comonomere verwendet werden.

Besonders geeignete Trägermaterialien sind u.a. Homopolymere des Propylens oder Copolymere des Propylens mit bis zu 50 Gew.-% einpolymerisierter anderer Alk-1-ene mit bis zu 8 C-Atomen. Die Copolymere des Propylens sind hierbei statistische Copolymere oder Block- oder Impactcopolymere. Sofern die Copolymere des Propylens statistisch aufgebaut sind, enthalten sie im allgemeinen bis zu 15 Gew.-%, bevorzugt bis zu 6 Gew.-%, andere Alk-1-ene mit bis zu 8 C-Atomen, insbesondere Ethylen, But-1-en oder ein Gemisch aus Ethylen und But-1-en.

Block- oder Impactcopolymere des Propylens sind Polymere, bei denen man in der ersten Stufe ein Propylenhomopolymer oder ein statistisches Copolymer des Propylens mit bis zu 15 Gew.-%, bevorzugt bis zu 6 Gew.-%, anderer Alk-1-ene mit bis zu 8 C-Atomen herstellt und dann in der zweiten Stufe ein Propylen-Ethylen-Copolymer mit Ethylengehalten von 15 bis 80 Gew.-%, wobei das Propylen-Ethylen-Copolymer zusätzlich noch weitere C₄-C₈-Alk-1-ene enthalten kann, hinzupolymerisiert. In der Regel wird soviel des Propylen-Ethylen-Copolymer hinzupolymerisiert, daß das in der zweiten Stufe erzeugte Copolymer im Endprodukt einen Anteil von 3 bis 60 Gew-% aufweist.

Die Polymerisation zur Herstellung von Polypropylen kann mittels eines Ziegler-Natta-Katalysatorsystems erfolgen. Dabei werden insbesondere solche Katalysatorsysteme verwendet, die neben einer titanhaltigen Feststoffkomponente a) noch Cokatalysatoren in Form von organischen Aluminiumverbindungen b) und Elektronendonorverbindungen c) aufweisen.

Es können aber auch Katalysatorsysteme auf der Basis von Metallocenverbindungen bzw. auf der Basis von polymerisationsaktiven Metallkomplexen eingesetzt werden.

Im speziellen enthalten übliche Ziegler-Natta-Katalysatorsysteme eine titanhaltige Feststoffkomponente u.a. Halogenide oder Alkohole des drei- oder vierwertigen Titans, ferner eine halogenhaltige Magnesiumverbindung, anorganische Oxide wie zum Beispiel Kieselgel als Träger sowie Elektronendonorverbindungen. Als solche kommen insbesondere Carbonsäurederivate sowie Ketone, Ether, Alkohole oder siliciumorganische Verbindungen in Frage.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066, der US-A 4 857 613 und der US-A 5 288 824 beschrieben. Bevorzugt wird das aus der DE-A 195 29 240 bekannte Verfahren angewandt.

Geeignete Aluminiumverbindungen b) sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Die Alkylgruppen können gleich oder voneinander verschieden sein. Es kommen lineare oder verzweigte Alkylgruppen in Betracht. Bevorzugt werden Trialkylaluminiumverbindungen verwendet, deren Alkylgruppen jeweils 1 bis 8 C-Atome aufweisen, beispielsweise Trimethylaluminium, Triethylaluminium, Tri-iso-butylaluminium, Trioctylaluminium oder Methyldiethylaluminium oder Mischungen daraus.

Neben der Aluminiumverbindung b) verwendet man in der Regel als weiteren Cokatalysator Elektronendonorverbindungen c) wie mono- oder polyfunktionelle Carbonsäuren, Carbonsäureanhydride oder Carbonsäureester, ferner Ketone, Ether, Alkohole, Lactone, sowie phosphor- und siliciumorganische Verbindungen, wobei die Elektronendonorverbindungen c) gleich oder verschieden von den zur Herstellung der titanhaltige Feststoffkomponente a) eingesetzten Elektronendonorverbindungen sein können.

Anstelle von Ziegler-Natta-Katalysatorsysteme können auch Metallocenverbindungen bzw. polymerisationsaktive Metallkomplexe zur Herstellung von Polypropylen verwendet werden.

Unter Metallocenen sollen hier Komplexverbindungen aus Metallen von Nebengruppen des Periodensystems mit organischen Liganden verstanden werden, die zusammen mit metalloceniumionenbildenden Verbindungen wirksame Katalysatorsysteme ergeben. Für einen Einsatz zur Herstellung von Polypropylen liegen die Metallocenkomplexe im Katalysatorsystem in der Regel geträgert vor. Als Träger werden häufig anorganische Oxide eingesetzt, es können aber auch organische Träger in Form von Polymeren, beispielsweise Polyolefine Verwendung finden. Bevorzugt sind die oben beschriebenen anorganischen Oxide, die auch zur Herstellung der titanhaltigen Feststoffkomponente a) verwendet werden.

Üblicherweise eingesetzte Metallocene enthalten als Zentralatome Titan, Zirkonium oder Hafnium, wobei Zirkonium bevorzugt ist. Im allgemeinen ist das Zentralatom über eine π-Bindung an mindestens eine, in der Regel substituierte, Cyclopentadienylgruppe sowie an weitere Substituenten gebunden. Die weiteren Substituenten können Halogene, Wasserstoff oder organische Reste sein, wobei Fluor, Chlor, Brom, oder Jod oder eine C₁-C₁₀-Alkylgruppe bevorzugt sind.

Die Cyclopentadienylgruppe kann auch Bestandteil eines entsprechenden heteroaromatischen Systems sein.

Bevorzugte Metallocene enthalten Zentralatome, die über zwei gleichartige oder verschiedene π-Bindungen an zwei substituierte Cyclopentadienylgruppen gebunden sind, wobei diejenigen besonders bevorzugt sind, in denen Substituenten der Cyclopentadienylgruppen an beide Cyclopentadienylgruppen gebunden sind. Insbesondere sind Komplexe bevorzugt, deren substituierte oder unsubstituierte Cyclopentadienylgruppen zusätzlich durch cyclische Gruppen an zwei benachbarten C-Atomen substituiert sind, wobei die cyclischen Gruppen auch in einem heteroaromatischen System integriert sein können.

Bevorzugte Metallocene sind auch solche, die nur eine substituierte oder unsubstituierte Cyclopentadienylgruppe enthalten, die jedoch mit mindestens einem Rest substituiert ist, der auch an das Zentralatom gebunden ist.

Geeignete Metallocenverbindungen sind beispielsweise Ethylenbis(indenyl)-zirkoniumdichlorid,
Ethylenbis(tetrahydroindenyl)-zirkoniumdichlorid,
Diphenylmethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiyl(2-methyl-4-azapentalen) (2-methyl-4(4'-methylphenyl)-indenyl)-zirkoniumdichlorid,
Dimethylsilandiyl(2-methyl-4-thiapentalen) (2-ethyl-4(4'-tert.butylphenyl)-indenyl)-zirkoniumdichlorid,
Ethandiyl(2-ethyl-4-azapentalen)(2-ethyl-4(4'-tert.butylphenyl)-indenyl)-zirkoniumdichlorid,
Dimethylsilandiylbis(2-methyl-4-azapentalen)-zirkoniumdichlorid,
Dimethylsilandiylbis(2-methyl-4-thiapentalen)-zirkoniumdichlorid
Dimethylsilandiylbis(-2-methylindenyl)-zirkoniumdichlorid,
Dimethylsilandiylbis(-2-methylbenzindenyl)-zirkoniumdichlorid
Dimethylsilandiylbis(-2-methyl-4-phenylindenyl)zirkoniumdichlorid,
Dimethylsilandiylbis(-2-methyl-4-naphthylindenyl)zirkoniumdichlorid,
Dimethylsilandiylbis(-2-methyl-4-isopropylindenyl)zirkoniumdichlorid oder
Dimethylsilandiylbis(-2-methyl-4,6-diisopropylindenyl)zirkoniumdichlorid sowie die entsprechenden Dimethylzirkoniumverbindungen.

Die Metallocenverbindungen sind entweder bekannt oder nach an sich bekannten Methoden erhältlich. Zur Katalyse können auch Mischungen derartiger Metallocenverbindungen eingesetzt werden, ferner die in der EP-A 416 815 beschriebenen Metallocenkomplexe.

Weiterhin enthalten die Metallocen-Katalysatorsysteme metalloceniumionenbildende Verbindungen. Geeignet sind starke, neutrale Lewissäuren, ionische Verbindungen mit lewissauren Kationen oder ionische Verbindungen mit Brönsted-Säuren als Kation. Beispiele sind hierfür Tris(pentafluorphenyl)boran, Tetrakis(pentafluorophenyl)borat oder Salze des N,N-Dimethylaniliniums. Ebenfalls geeignet als metalloceniumionenbildende Verbindungen sind offenkettige oder cyclische Alumoxanverbindungen. Diese werden üblicherweise durch Umsetzung von Trialkylaluminium mit Wasser hergestellt und liegen in der Regel als Gemische unterschiedlich langer, sowohl linearer als auch cyclischer Kettenmoleküle vor.

Darüber hinaus können die Metallocen-Katalysatorsysteme metallorganische Verbindungen der Metalle der I., II. oder III. Hauptgruppe des Periodensystems enthalten wie n-Butyl-Lithium, n-Butyl-n-octyl-Magnesium oder Tri-iso-butyl-aluminium, Triethylaluminium oder Trimethylaluminium.

Die Herstellung der für die Trägerschicht verwendeten Polypropylene wird durch Polymerisation in wenigstens einer, häufig auch in zwei oder noch mehr hintereinandergeschalteten Reaktionszonen (Reaktorkaskade), in der Gasphase, in einer Suspension oder in einer flüssigen Phase (Bulkphase) durchgeführt. Es können die üblichen, für die Polymerisation von C₂-C₈-Alk-1-enen verwendeten Reaktoren eingesetzt werden. Geeignete Reaktoren sind u.a. kontinuierlich betriebene Rührkessel, Schleifenreaktoren oder Wirbelbettreaktoren. Die Größe der Reaktoren ist hierbei nicht von wesentlicher Bedeutung. Sie richtet sich nach dem Ausstoß, der in der oder in den einzelnen Reaktionszonen erzielt werden soll.

Als Reaktoren werden insbesondere Wirbelbettreaktoren sowie horizontal oder vertikal gerührte Pulverbettreaktoren verwendet. Das Reaktionsbett besteht dabei im allgemeinen aus dem Polymerisat aus C₂-C₈-Alk-1-enen, das im jeweiligen Reaktor polymerisiert wird.

Die Polymerisation zur Herstellung der als Trägerschichten verwendeten Polypropylene wird unter üblichen Reaktionsbedingungen bei Temperaturen von 40 bis 120°C, insbesondere von 50 bis 100°C und Drücken von 10 bis 100 bar, insbesondere von 20 bis 50 bar vorgenommen.

Die als Träger verwendeten Polypropylene weisen in der Regel eine Schmelzflußrate (MFR), nach ISO 1133, von 0,1 bis 200 g/10 min., insbesondere von 0,2 bis 100 g/10 min., bei 230°C und unter einem Gewicht von 2,16 kg, auf.

Weiterhin enthält das erfindungsgemäße Schichtverbundmaterial noch eine Zwischenlage, die auf dem Träger angebracht ist. Vorzugsweise besteht die Zwischenlage aus dem gleichen thermoplastischen Kunststoff wie der Träger, wodurch sich die Haftung zwischen Träger und Zwischenlage besonders verbessert. Die Zwischenlage.liegt insbesondere als dünnes Vlies mit einer Dicke von 0,001 bis 1,0 mm, insbesondere von 0,005 bis 0,3 mm vor. Als Materialien für die Zwischenlage kommen die gleichen thermoplastischen Kunststoffe in Frage, wie sie bereits für die Träger beschrieben sind, also insbesondere Polypropylen.

Weiterhin weist das erfindungsgemäße Schichtverbundmaterial als Dekorschicht ein verchromtes Metall auf. Das verchromte Metall befindet sich dabei auf der Zwischenlage und weist eine Schichtdicke von 0,1 bis 0,5 mm, insbesondere von 0,1 bis 2,0 mm und besonders bevorzugt von 0,1 bis 1,0 mm auf. Als verchromtes Metall kann dabei sowohl eine Schicht aus Chrom als auch eine Schicht aus einem anderen Metall wie beispielsweise Edelstahl, Eisen, Kupfer, Nickel, Zinn oder Zink oder entsprechenden Legierungen dieser Metalle verwendet werden, wobei diese Schicht dann mit einer weiteren Schicht aus Chrom überzogen ist. Weiterhin ist es möglich, als verchromtes Metall eine Schicht aus einem geeigneten thermoplastischen Polymeren zu verwenden, die mit einer weiteren Schicht aus Chrom überzogen ist. Hierfür gut geeignete thermoplastische Polymere sind u.a Polyolefine wie z.B. Polypropylen oder Polyethylen, Polyamide, Polycarbonate, sowie Copolymere des Styrols, beispielsweise SAN oder ABS.

Aufgrund des Aufbaus der Dekorschicht aus einem verchromten Metall besitzt diese sowohl reflektierende als auch isolierende Eigenschaften. Die Dekorschicht sollte zum Erreichen einer guten Strahlungsreflektion eine möglichst glatte Oberfläche aufweisen. Damit die erfindungsgemäßen Schichtverbundmaterialien gute isolierende Eigenschaften aufweisen, ist es empfehlenswert, die Dicke der Dekorschicht möglichst hoch zu wählen und auf diese noch eine möglichst dicke hitzegehärtete Schicht (Overlay) aufzubringen. Dabei wirkt das Overlay, welches im Regelfall aus einem duroplastischen Harz besteht, als guter Isolator. Weiterhin wird durch den Laminataufbau der thermoplastische Träger sowohl thermisch als auch mechanisch abgeschirmt, was zur Folge hat, daß die erfindungsgemäßen Schichtverbundmaterialien auch bei höheren Temperaturen nicht zum Aufweichen neigen.

Weiterhin können die erfindungsgemäßen Schichtverbundmaterialien noch eine hitzegehärtete Schicht enthalten, die auf der Dekorschicht aufgebracht ist.

Die auf der Dekorschicht angeordnete hitzegehärtete Schicht (Overlay) besteht vorzugsweise aus einem duroplastischen Kunststoffmaterial, beispielsweise aus einem mit Acrylharz, Phenolharz, Melaminharz oder Harnstoffharz getränktem Papier, das durch Druck- oder Hitzeeinwirkung während der Herstellung des Schichtverbundmaterials vernetzt wird. Das Gewicht der hitzegehärteten Schicht (Overlay) liegt üblicherweise im Bereich von 10 bis 300 g pro m², insbesondere im Bereich von 15 bis 150 g pro m² und besonders bevorzugt im Bereich von 20 bis 70 g pro m².

Die hitzegehärtete Schicht (Overlay) kann auch zusammen mit der Dekorschicht als Fertiglaminat wahlweise einseitig oder auch beidseitig auf der Zwischenlage angeordnet sein. Derartige Fertiglaminate sind als solche bekannt und u.a. von der Firma Melaplast in Schweinfurt, Deutschland erhältlich.

Die Gesamtdicke des erfindungsgemäßen Schichtverbundmaterials liegt im Bereich von 0,5 mm bis 100 mm, vorzugsweise im Bereich von 1,0 mm bis 20 mm, insbesondere im Bereich von 1,0 bis 10 mm, wobei auf den Träger wenigstens 80 %, vorzugsweise wenigstens 90 % der Gesamtdicke entfallen.

Die Herstellung der erfindungsgemäßen Schichtverbundmaterialien kann nach einem Verfahren erfolgen, bei welchem die Materialien für die Zwischenlage, die Dekorschicht und gegebenenfalls die hitzegehärtete Schicht jeweils in Form dünner flächiger Gebilde vorgelegt werden und anschließend bei Temperaturen von 150 bis 300°C, insbesondere von 160 bis 280°C, mit dem Material für den Träger verbunden werden. Vorzugsweise können dabei die Zwischenlage, die Dekorschicht und die hitzegehärtete Schicht (Overlay) auch zusammen in Form eines Fertiglaminates eingesetzt werden, welches ebenfalls als flächiges Gebilde vorliegt.

Weiterhin ist es möglich, zuerst die Zwischenlage, die Dekorschicht und gegebenenfalls die hitzegehärtete Schicht durch Tauchen in ein Klebebad oder durch den Einsatz dünner Klebebänder in einer Presse, vorzugsweise in einer Doppelbandpresse, miteinander zu verbinden und anschließend diesen Verbund auf den Träger aufzubringen. Dabei kann es sich auch empfehlen, den Verbund aus Zwischenlage, Dekorschicht und gegebenenfalls hitzegehärteter Schicht zunächst durch ein Tiefziehverfahren bzw. eine direkte Verformung, beispielsweise in einem Spritzgußwerkzeug, zweidimensional zu verformen und danach mit dem thermoplastischen Polypropylen, welches den Träger bilden soll, durch Hinterspritzen, Extrudieren oder thermisches Verpressen zu vereinigen. Weil erfindungsgemäß der Träger und die Zwischenlage aus jeweils identischen thermoplastischen Kunststoffen bestehen, beobachtet man eine sehr hohe Haftung zwischen beiden Schichten.

Das Verfahren zur Herstellung des erfindungsgemäßen Schichtverbundmaterials kann ferner in der Weise abgewandelt werden, daß das Schichtverbundmaterial nach vorangegangener Wärmebehandlung bei Temperaturen von 150 bis 300°C, insbesondere von 150 bis 250°C und besonders bevorzugt von 160 bis 200°C dreidimensional verformt wird. Auf diese Weise lassen sich u.a. Formkörper für die Elektro-, die Bau- oder Automobilindustrie herstellen.

Das erfindungsgemäße Schichtverbundmaterial ist ferner in der Weise herstellbar, daß das Verbinden der Zwischenlage, der Dekorschicht, gegebenenfalls der hitzegehärteten Schicht und dem Träger durch übliche Verarbeitungsverfahren in der Kunststoffindustrie durchgeführt wird. Übliche Verarbeitungsverfahren sind hierbei u.a. das Spritzgießen, die Extrusion oder das thermische Verpressen der einzelnen Schichten.

Beim Spritzgießen werden die einzelnen Schichten, also der Träger, die Zwischenlage, die Dekorschicht und gegebenenfalls die hitzegehärtete Schicht (die letzten Schichten auch zusammen als Fertiglaminat) entweder direkt über ein Tiefziehverfahren vorge formt und anschließend in einem Spritzgußwerkzeug miteinander hinterspritzt, oder aber direkt erst im Spritzgußwerkzeug miteinander verformt und hinterspritzt. Dies kann sowohl einseitig als auch beidseitig geschehen, wobei im letzteren Fall die Zwischenlage, die Dekorschicht und gegebenenfalls die hitzegehärtete Schicht auf beiden Seiten des Trägers angeordnet sind. Dieser Spritzgußvorgang erfolgt üblicherweise bei Temperaturen von 150 bis 300°C, insbesondere von 180 bis 280°C, bevorzugt von 190 bis 270°C und Drücken von 50 bis 100 N/cm², insbesondere von 60 bis 80 N/cm². Durch die im Spritzgußwerkzeug auftretenden Temperaturen und Drücke erreicht man nicht nur eine sehr gute Verbindung der thermoplastischen Zwischenlage mit dem thermoplastischen Träger, sondern auch eine weitere Aushärtung des erfindungsgemäßen Schichtverbundmaterials. Dieses ist gegenüber den bisher bekannten Schichtverbundmaterialien sehr flexibel und läßt sich in weiteren Verarbeitungsschritten gut verformen.

Beim Extrusionsverfahren werden die Zwischenlage, die Dekorschicht und gegebenenfalls die hitzegehärtete Schicht des erfindungsgemäßen Schichtverbundmaterials über temperierte Kalander- oder Prägewalzen dem thermoplastischen Kunststoff des Trägers einseitig oder beidseitig zugeführt (sog. Kaschieren) und auf diese Weise miteinander verbunden. Dabei werden üblicherweise Temperaturen von 150 bis 300°C, insbesondere von 160 bis 250°C, bevorzugt von 170 bis 220°C und Drücke von 40 bis 200 N/cm², insbesondere von 50 bis 100 N/cm² eingestellt. Auf diese Weise erreicht man eine sehr gute Haftung der einzelnen flächigen Gebilde untereinander. Das erhaltene Schichtverbundmaterial weist ferner gute Oberflächeneigenschaften auf.

Eine Variante des Extrusionsverfahren ist das sogenannte Profilextrusionsverfahren, bei dem die einzelnen Schichten des erfindungsgemäßen Schichtverbundmaterials, insbesondere die Zwischenlage über eine Kalibrierung so verformt werden, daß diese anschließend dem eigentlichen Profil, d.h. dem Träger aus thermoplastischem Kunststoff, direkt zugeführt werden kann.

Weiterhin ist das erfindungsgemäße Schichtverbundmaterial auch durch thermisches Verpressen der einzelnen Schichten erhältlich, wobei deren Verformung entweder vorab über ein vorgeschaltetes Tiefziehverfahren, oder aber direkt in der Presse erfolgen kann. Dabei gibt man ein thermoplastisches Kunststoffgranulat direkt auf einen Laminatverbund aus der Zwischenlage, der Dekorschicht und gegebenenfalls der hitzegehärteten Schicht und verpresst dieses miteinander bei Temperaturen von 150 bis 300°C, insbesondere von 160 bis 250°C, bevorzugt von 170 bis 230°C, Drücken von 50 bis 120 N/cm², insbesondere von 80 bis 100 N/cm² sowie Presszeiten von 0,5 bis 10 min., insbesondere von 1 bis 5 min und besonders bevorzugt von 1 bis 3 min.

Die erfindungsgemäßen Schichtverbundmaterialien zeichnen sich u.a. durch gute mechanische Eigenschaften aufgrund der guten Haftung zwischen den einzelnen Schichten aus. Sie sind zwei- oder dreidimensional gut verformbar, weisen ferner eine hohe Resistenz gegenüber hohen Temperaturen oder Chemikalien auf und sind alterungsbeständig. Die erfindungsgemäßen Schichtverbundmaterialien können leicht mit anderen Funktionselementen verbunden werden und besitzen überdies gute isolierende und reflektierende Eigenschaften gegenüber Licht- und oder Wärmestrahlung. Ein besonderer Vorteil dieser Materialien besteht ferner darin, daß diese aufgrund ihrer Laminatstruktur bruchfest sind, was ihnen besondere Vorteile gegenüber herkömmlichen Reflektoren wie zum Beispiel Spiegel verschafft.

Die erfindungsgemäßen Schichtverbundmaterialien eigenen sich u.a. als reflektierende oder als isolierende Teile in Haushaltsgeräten, Möbelstücken oder in der Elektro-, der Bau- oder der Automobilindustrie oder im Gesundheitsbereich.

Das ebenfalls erfindungsgemäße Verfahren zur Herstellung der Schichtverbundmaterialien ist einfach durchzuführen und zeichnet sich insbesondere dadurch aus, daß das übliche Herstellungs- und Montageverfahren Verwendung finden.

In den nachfolgenden Beispielen und Ausführungsformen soll die Erfindung noch näher erläutert werden. Im Rahmen der Beispiele wurden folgende Prüfungen an Probekörpern durchgeführt:
- Der Glanz wurde visuell bestimmt.
- Die Stoßbeanspruchung wurde durch einen Falltest aus 1,75 m Höhe bestimmt.
- Der Biege E-Modul wurde bei +23°C, +60°C und +90°C nach ISO 178 gemessen.
- Die Schlagzähigkeit, nach Charpy, wurde bei +23°C und bei -20°C nach ISO 179/1eU ermittelt.
- Die Wärmeformbeständigkeit (HDT/A) wurde nach ISO 75/1+2 gemessen.

### Beispiel 1 und Vergleichsbeispiel A

Ein erfindungsgemäßes Schichtverbundmaterial (Beispiel 1) wurde hinsichtlich seiner reflektierenden Eigenschaften mit einem konventionellen Spiegel (Vergleichsbeispiel A) verglichen.

Das Schichtverbundmaterial bestand aus einer Schicht aus einem Propylenhomopolymer als Träger, mit einer Schmelzflußrate (MFR), nach ISO 1133, von 15 g/10 min., bei 230°C und 2,16 kg, einer Zwischenlage aus einem Kunststoffvlies aus dem gleichen Propylenhomopolymer, einer Dekorschicht aus einem verchromten Edelstahl mit einer Schichtdicke von 0,2 mm und einem Overlay aus Melaminharz mit einer Schichtdicke von 0,1 mm. Das Schichtverbundmaterial wies eine Gesamtdicke von 1,4 mm auf, wobei auf den Träger 90 % der Gesamtdicke entfielen,

Das erfindungsgemäße Schichtverbundmaterial und der konventionelle Spiegel wurden hinsichtlich ihres Glanzes, ihres Reflexionsgrades und ihres Bruchverhaltens miteinander verglichen. Die Ergebnisse der Messungen sind in der nachfolgenden Tabelle I wiedergegeben.

**Tabelle I**

| Eigenschaft | Beispiel 1 | Vergleichsbeispiel A |
|---|---|---|
| Glanz | gut | sehr gut |
| Reflexionsgrad | sehr gut | sehr gut |
| Stoßbeanspruchung | ohne erkennbare Beschädigung | zerstört |

Aus den Ergebnissen der Tabelle I geht u.a. hervor, daß sich das erfindungsgemäße Schichtverbundmaterial bei noch gutem Glanz durch ein sehr gutes Bruchverhalten auszeichnet.

### Beispiel 2 und Vergleichsbeispiel B

Es wurde ein erfindungsgemäßes Schichtverbundmaterial (Beispiel 2) hinsichtlich seiner mechanischen und thermischen Stabilität mit einem üblichen Probekörper aus Polypropylen (Vergleichsbeispiel B) verglichen.

Das Schichtverbundmaterial des Beispiels 2 bestand aus dem gleichen Trägermaterial, der gleichen Zwischenlage, der gleichen Dekorschicht und dem gleichen Overlay wie im Beispiel 1, wobei die Dekorschicht jetzt eine Schichtdicke von 0,2 mm und das Overlay eine Schichtdicke von 0,1 mm aufwies. Das Schichtverbundmaterial wies eine Gesamtdicke von 1,4 mm auf, wobei auf den Träger 90 % der Gesamtdicke entfielen.

Der Probekörper des Vergleichsbeispiels B bestand aus einem Propylenhomopolymer mit einer Schmelzflußrate (MFR), nach ISO 1133, von 15 g/10 min., bei 230°C und 2,16 kg.

Das erfindungsgemäße Schichtverbundmaterial und der Probekörper des Vergleichsbeispiels B wiesen beide die gleichen Dimensionen auf. Sie wurden beide hinsichtlich ihres Biege-E-Moduls, ihrer Schlagzähigkeit, nach Charpy und ihres Wärmeformbeständigkeit-Wertes (HDT/A) vermessen. Die Ergebnisse der Messungen sind in der nachfolgenden Tabelle II wiedergegeben.

**Tabelle II**

| Eigenschaft | Beispiel 2 | Vergleichsbeispiel B |
|---|---|---|
| Biege-E-Modul [N/mm²] bei +23°C | 8921 | 2000 |
| bei +60°C | 7224 | 1000 |
| bei +90°C | 6293 | 800 |
| Schlagzähigkeit nach Charpy [kJ/m²] bei +23°C | 25,6 | 60 |
| bei -20°C | 18,9 | 16 |
| Wärmeformbeständigkeit [°C] (HDT/A) | 160 | 58 |

Aus den Ergebnissen der Tabelle II geht u.a. hervor, daß sich das erfindungsgemäße Schichtverbundmaterial u.a. durch ein hohes Biege-E-Modul, eine hohe Schlagzähfestigkeit nach Charpy, sowie gute Werte bzgl. der Wärmeformbeständigkeit (HDT/A) auszeichnet.

Einige beispielhafte Ausführungsformen der erfindungsgemäßen Schichtverbundmaterialien sind in den nachfolgenden Zeichnungen (Figuren 1 bis 5) schematisch dargestellt und im folgenden näher erläutert.

Es zeigt,
- Figur 1: eine Toast-Haube aus dem erfindungsgemäßen Schichtverbundmaterial
- Figur 2: das "lichtdichte" Gehäuse einer elektrischen Zahnbürste
- Figur 3: den Aufbau eines "bruchsicheren" Spiegels
- Figur 4: den Aufbau eines Gehäuses/Reflektors für Leuchten/Höhensonnen
- Figur 5: den Aufbau eines elektromagnetisch abgeschirmten Gehäuses

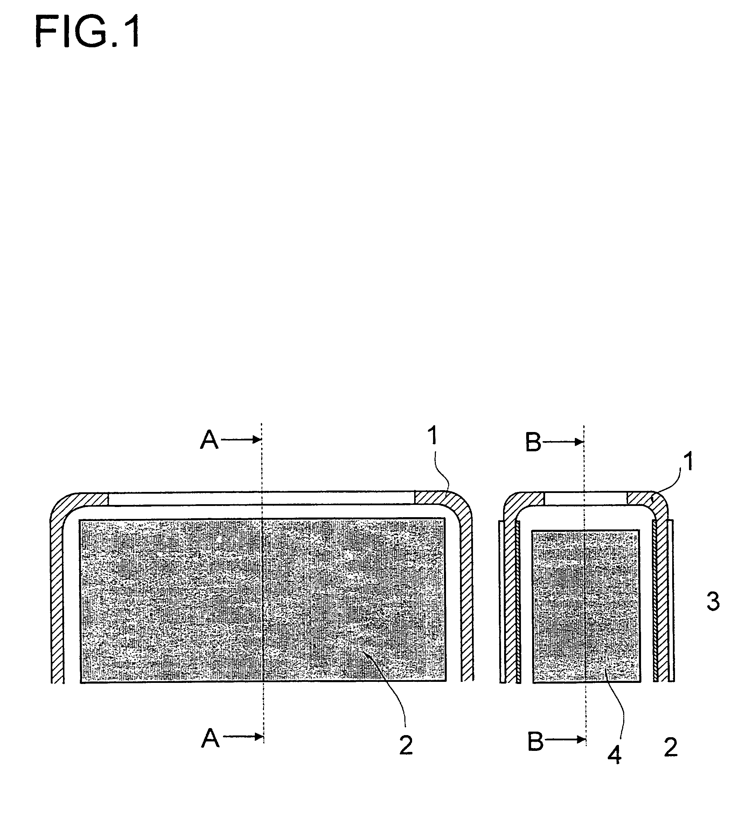

### Beschreibung Figur 1:

An den Seitenflächen des Toasterhauben-Trägers (1) aus einem Propylenhomopolymer mit einer Schmelzflußrate (MFR), nach ISO 1133, von 15 g/min., bei 230°C und 2,16 kg, ist an der Innenseite ein Laminat (2) aus einer Zwischenlage aus einem Vlies, das aus einem mit Metallocen-Katalysatoren hergestellten Polypropylen besteht und aus einem verchromten Metall als Dekorschicht angeordnet, das als Isolationsschicht dient und welche die von der eigentlichen Toastvorrichtung (4) abgegebene Wärme vom Toasterhauben-Träger (1) abhält. Aus Verzugsgründen wird ferner ein entsprechendes weiteres Laminat (3), das aus den gleichen Bestandteilen ausgebaut ist wie das Laminat (2), auf der diesem gegenüberliegenden Seite angebracht. Auf diese Weise ist es möglich, den Spalt zwischen der Toastvorrichtung (4) und dem Toasterhauben-Träger (1) zu reduzieren, was neue Toaster-Designs erlaubt.

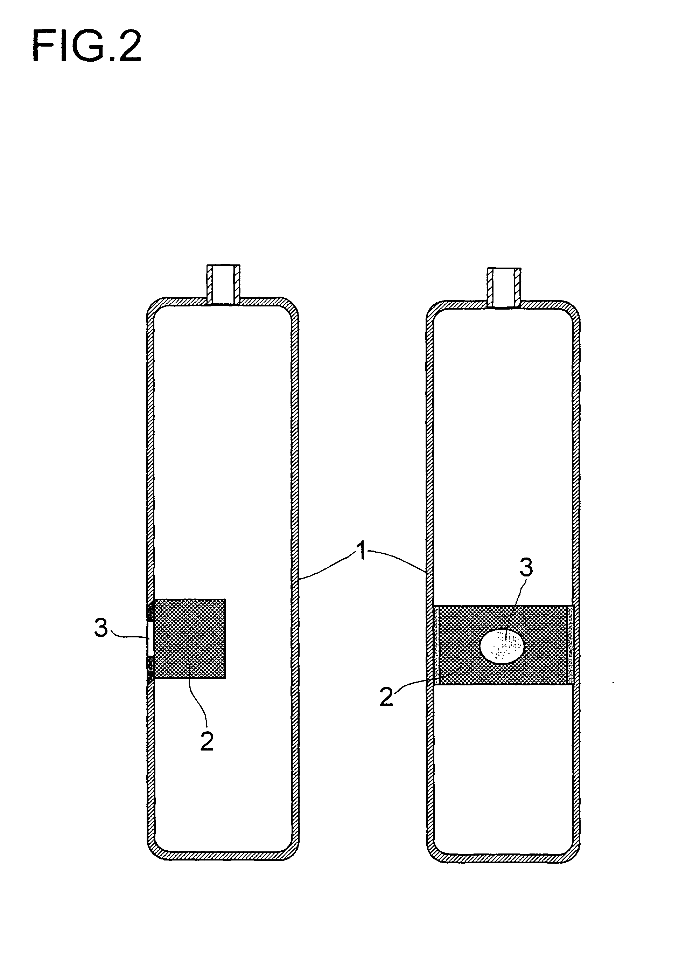

### Beschreibung Figur 2:

Das Gehäuse (1) einer elektrischen Zahnbürste aus einem Propylenhomopolymer mit einer Schmelzflußrate (MFR), nach ISO 1133, von 50 g/min., bei 230°C und 2,16 kg enthält einen Durchbruch für eine Leuchtdiode (3). Damit die Leuchtdiode nicht durch das gesamte Gehäuse sichtbar wird, wird um die Aussparung im Gehäuse eine Laminatschicht (2) angebracht, die das Gehäuse (1) um die Leuchtdiode (3) lichtdicht gestaltet. Die Laminatschicht besteht dabei aus einer Zwischenlage aus einem Vlies, das aus einem mit Metallocen-Katalysatoren hergestellten Polypropylen besteht und einer Dekorschicht aus verchromten Metall. Das Gehäuse (1) stellt in diesem Fall den Träger des Laminates (2) dar. Die Größe und die Dicke des Laminates werden entsprechend der Leuchtdioden-Leuchtleistung gewählt.

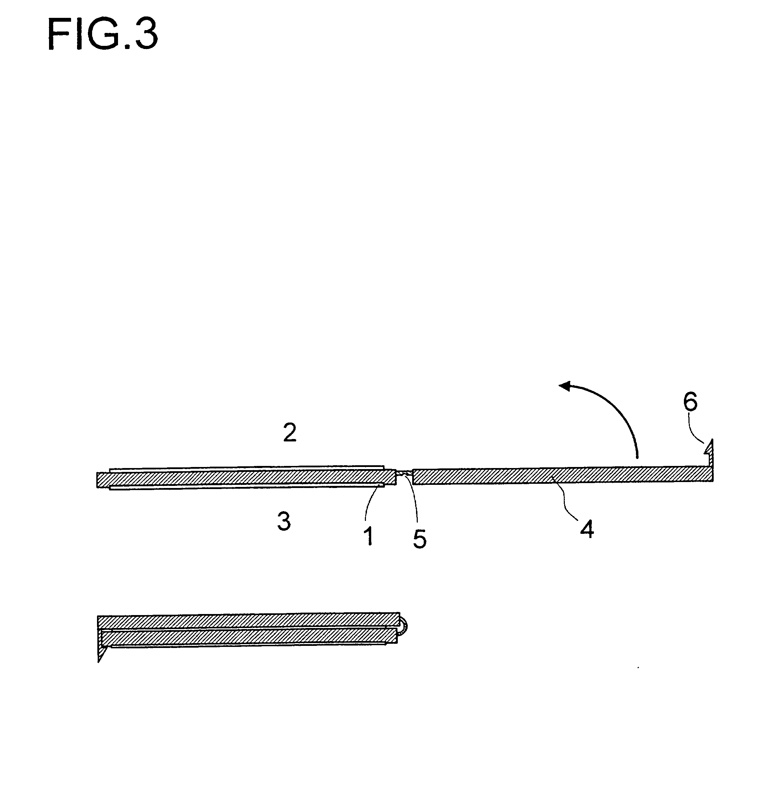

### Beschreibung Figur 3:

Der Träger des Spiegels (1) besteht aus einem Propylencopolymer mit 20 Gew.-% einpolymerisiertem Ethylen und einem Schmelzflußindex von 15 g/10 min., nach ISO 1133, bei 230°C und 2,16 kg. Am Träger (1) ist über ein Filmgelenk (5) ein Deckel (4) angeformt,der, um das Laminat mit der spiegelnden Metalloberfläche (2) vor Beschädigung zu schützen, über diese geklappt werden kann. Um ein unbeabsichtigtes Öffnen des Deckels (4) zu verhindern, wird dieser mittels eines Schnapphakens (6) am Träger (1) fixiert. An der Rückseite des Trägers ist ein Gegenzug (3) gleicher Abmessung aus dem gleichen Laminat angebracht wie das Laminat mit der spiegelnden Metalloberfläche (2). Die Laminatschicht besteht dabei aus einer Zwischenlage aus einem Vlies, das aus einem mit Metallocen-Katalysatoren hergestellten Polypropylen besteht und einer Dekorschicht aus verchromten Metall und einem Melaminharz als Overlay.

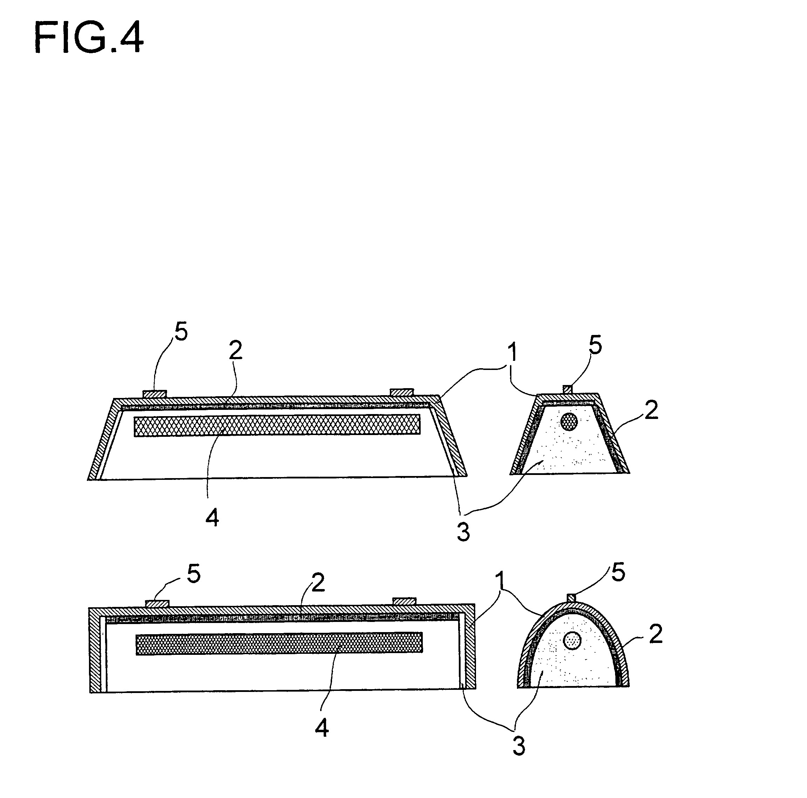

### Beschreibung Figur 4:

Das Gehäuse der Leuchte bildet den Träger aus einem mit 20 Gew.-% Talkum verstärktem Propylenhomopolymer mit einem Schmelzflußindex von 15 g/10 min., nach ISO 1133, bei 230°C und 2,16 kg, auf dem sich das Laminat der spiegelnden Metallfläche (2, 3) befindet, wobei in diesem Fall die Stirnflächen mit separaten Laminatteilen (3) ausgeführt werden. Es wird dabei das gleiche Laminat verwendet wie bei der Figur 3 beschrieben. Im Gehäuse (1) ist zwischen beiden spiegelnden Laminatflächen (2, 3) die Leuchte (4) so angeordnet, daß deren Licht von den Laminatflächen (2) und (3) reflektiert werden kann. Am Träger (1) sind ferner Befestigungsvorrichtungen (5) zur Montage der Leuchte (4) angeformt.

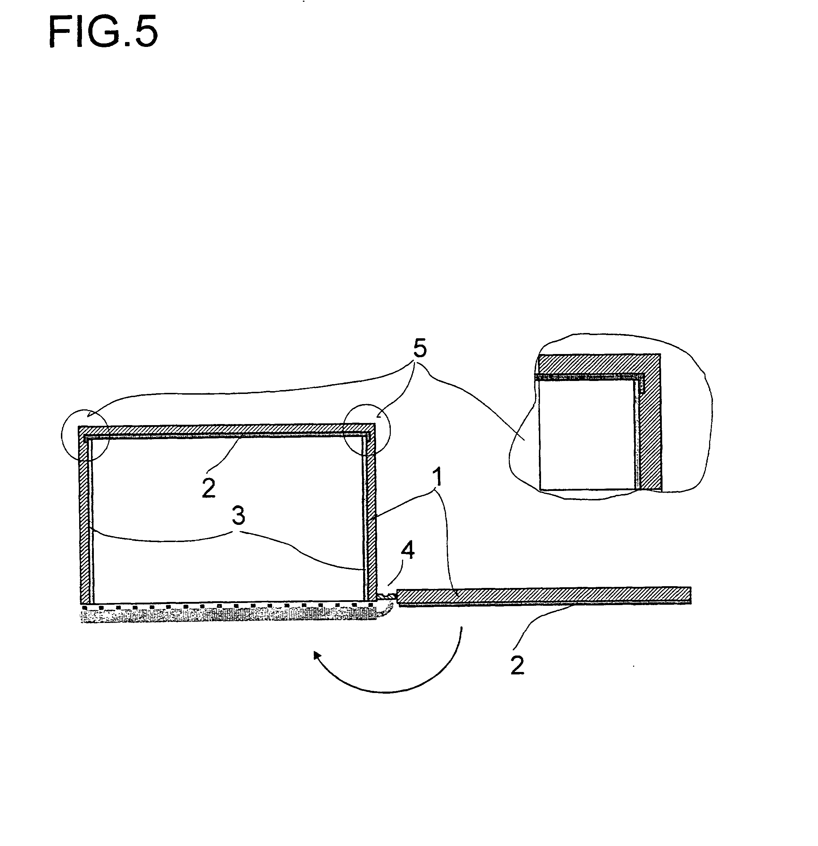

### Beschreibung Figur 5:

Der Träger (1) der isolierenden Laminatschichten (2, 3) besteht aus einem mit Hilfe von Metallocenkatalysatoren hergestellten Propylenhomopolymer mit einer Schmelzflußrate (MFR), nach ISO 1133, von 50 g/min., bei 230°C und 2,16 kg. Es wird dabei das gleiche Laminat verwendet, wie bei der Figur 3 beschrieben. Der Träger (1) bildet sowohl den Gehäuseboden als auch den Gehäusedeckel, wobei beide Teile über ein Filmgelenk (4) miteinander verbunden sind. Zum Zwecke einer optimierten Abschirmwirkung sind die einzelnen Laminate für die Bodenfläche (2) und die Seitenflächen (3) in den Eckbereichen überlappend ausgeformt.

## Patentansprüche

1. Schichtverbundmaterialien, enthaltend einen Träger aus thermoplastischem Polypropylen mit einer Schmelzflussrate (MFR) im Bereich von 0,2 bis 100 g/10 min, bei 230 °C und einem Gewicht von 2,16 kg, einer Zwischenlage aus einem Vlies aus thermoplastischem Polypropylen, einer auf die Zwischenlage aufgebrachten Dekorschicht aus einem verchromten Metall und einer auf die Dekorschicht aufgebrachten hitzegehärtete Schicht.

2. Schichtverbundmaterialien nach Ansprüch 1, wobei deren Gesamtdicke im Bereich von 0,5 mm bis 100 mm liegt und auf den Träger wenigstens 80 % der Gesamtdicke fallen.

3. Verfahren zur Herstellung eines Schichtvärbundmaterials gemäß Ansprüch 1 oder 2, **dadurch gekennzeichnet, daß** die Materialien für die Zwischenlage, die Dekorschicht und gegebenenfalls die hitzegehärtete Schicht jeweils in Form dünner flächiger Gebilde vorgelegt werden und anschließend bei Temperaturen von 150 bis 300°C mit dem Material für den Träger verbunden werden.

4. Verfahren nach Anspruch 3, **dadurch gekennzeichnet, daß** die Dekorschicht nach vorangegangener Wärmebehandlung bei Temperaturen von 150 bis 300°C dreidimensional verformt wird.

5. Verfahren nach den Ansprüchen 3 oder 4, **dadurch gekennzeichnet, daß** das Verbinden der Zwischenlage, der Dekorschicht und gegebenenfalls der hitzegehärteten Schicht und dem Träger durch Spritzgießen erfolgt.

6. Verfahren nach den Ansprüchen 3 bis 5, **dadurch gekennzeichnet, daß** das Verbinden der Zwischenlage, der Dekorschicht und gegebenenfalls der hitzegehärteten Schicht und dem Träger durch Extrusion erfolgt.

7. Verfahren nach den Ansprüchen 3 bis 6, **dadurch gekennzeichnet, daß** das Verbinden der Zwischenlage, der Dekorschicht und gegebenenfalls der hitzegehärteten Schicht und dem Träger durch thermisches Verpressen erfolgt.

8. Verwendung des Schichtverbundmaterials gemäß den Ansprüchen 1 oder 2 als reflektierendes Teil eines Haushaltsgerätes, eines Möbelstücks oder eines Formteils in der Elektro-, Bau- oder Automobilindustrie oder im Gesundheitsbereich.

9. Verwendung des Schichtverbundmaterials gemäß den Ansprüchen 1 oder 2 als isolierendes Teil eines Haushaltsgerätes, eines Möbelstücks oder eines Formteils in der Elektro-, Bau- oder Automobilindustrie oder im Gesundheitsbereich.

## Claims

1. A layered composite material which comprises a substrate made from thermoplastic polypropylene having a melt flow rate (MFR) of from 0.2 to 100 g/10 min at 230°C with a load of 2.16 kg, an intermediate layer made from a nonwoven made from thermoplastic polypropylene, a decorative layer made from a chromed metal and applied to the intermediate layer, and a heat-cured layer applied to the decorative layer.

2. The layered composite material according to claim 1, the total thickness of which is from 0.5 to 100 mm, at least 80% of which is made up by the substrate.

3. A process for producing a layered composite material according to claim 1 or 2, which comprises providing the materials for the intermediate layer, the decorative layer and, if appropriate, the heat-cured layer, each in the form of thin sheets, and then bonding these at from 150 to 300°C with the material for the substrate.

4. The process according to claim 3, wherein the decorative layer is shaped in three dimensions after heat-treatment at from 150 to 300°C.

5. The process according to claim 3 or 4, where the bonding to the intermediate layer, to the decorative layer and to the heat-cured layer, if appropriate, and to the substrate takes place by injection molding.

6. The process according to any of claims 3 to 5, wherein the bonding to the intermediate layer, to the decorative layer and to the heat-cured layer, if appropriate, and to the substrate takes place by extrusion.

7. The process according to any of claims 3 to 6, wherein the bonding to the intermediate layer, to the decorative layer and to the heat-cured layer, if appropriate, and to the substrate takes place by hot-press molding.

8. The use of the layered composite material according to either of claims 1 and 2 as a reflecting part of a household device, of a piece of furniture or of a molding in the electrical, construction or automotive industry or in the health sector.

9. The use of the layered composite material according to either of claims 1 and 2 as an insulating part of a household device, of a piece of furniture or of a molding in the electrical, construction or automotive industry or in the health sector.

## Revendications

1. Matériaux composites stratifiés, contenant un support en polypropylène thermoplastique avec un indice d'écoulement à l'état fondu (MFR) situé dans l'intervalle allant de 0,2 à 100 g/10 minutes, à 230°C et un poids de 2,16 kg, une couche intermédiaire en un voile de polypropylène thermoplastique, une couche de décoration appliquée sur la couche intermédiaire, en un métal plaqué au chrome et une couche durcie par chauffage appliquée sur la couche de décoration.

2. Matériaux composites stratifiés selon la revendication 1, où leur épaisseur totale se situe dans l'intervalle allant de 0,5 mm à 100 mm et au moins 80% de l'épaisseur totale sont attribués au support.

3. Procédé de préparation de matériaux composites stratifiés selon la revendication 1 ou 2, **caractérisé en ce que** les matériaux pour la couche intermédiaire, la couche de décoration et le cas échéant, la couche durcie par chauffage sont disposés chaque fois, sous forme de structure surfacique fine et ensuite, reliés au matériau du support à des températures de 150 à 300°C.

4. Procédé selon la revendication 3, **caractérisé en ce que** la couche de décoration est formée de manière tridimensionnelle après le traitement thermique préalable à des températures de 150 à 300°C.

5. Procédé selon la revendication 3 ou 4, **caractérisé en ce que** la liaison de la couche intermédiaire, de la couche de décoration et le cas échéant, de la couche durcie par chauffage et du support est réalisée par moulage par injection.

6. Procédé selon la revendication 3 à 5, **caractérisé en ce que** la liaison de la couche intermédiaire, de la couche de décoration et le cas échéant, de la couche durcie par chauffage et du support est réalisée par extrusion.

7. Procédé selon la revendication 3 à 6, **caractérisé en ce que** la liaison de la couche intermédiaire, de la couche de décoration et le cas échéant, de la couche durcie par chauffage et du support est réalisée par compression thermique.

8. Utilisation du matériau composite stratifié selon les revendications 1 ou 2 comme pièce réfléchissante d'un appareil ménager, d'une pièce de meuble ou d'une pièce moulée dans l'industrie électronique, de la construction ou automobile ou dans le domaine de la santé.

9. Utilisation du matériau composite stratifié selon les revendications 1 ou 2 comme pièce isolante d'un appareil ménager, d'une pièce de meuble ou d'une pièce moulée dans l'industrie électronique, de la construction ou automobile ou dans le domaine de la santé.
